(19) Europäisches Patentamt
European Patent Office
Office européen des brevets

(11) EP 4 416 106 B1

(12) **EUROPEAN PATENT SPECIFICATION**

(45) Date of publication and mention of the grant of the patent:
**17.12.2025 Bulletin 2025/51**

(21) Application number: **22801727.3**

(22) Date of filing: **05.10.2022**

(51) International Patent Classification (IPC):
***C01G 53/00*** *(2025.01)*

(52) Cooperative Patent Classification (CPC):
**C01G 53/50;** C01P 2004/60; C01P 2006/40; Y02E 60/10

(86) International application number:
**PCT/EP2022/077697**

(87) International publication number:
**WO 2023/061826 (20.04.2023 Gazette 2023/16)**

(54) **MANUFACTURE OF ELECTRODE ACTIVE MATERIALS, AND ELECTRODE ACTIVE MATERIALS**

HERSTELLUNG VON ELEKTRODENAKTIVMATERIALIEN SOWIE ELEKTRODENAKTIVMATERIALIEN

FABRICATION DE MATÉRIAUX ACTIFS D'ÉLECTRODE, ET MATÉRIAUX ACTIFS D'ÉLECTRODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.10.2021 EP 21202107**

(43) Date of publication of application:
**21.08.2024 Bulletin 2024/34**

(73) Proprietor: **BASF SE**
**67056 Ludwigshafen am Rhein (DE)**

(72) Inventors:
- **KURZHALS, Philipp**
  **67056 Ludwigshafen (DE)**
- **SOMMER, Heino**
  **72072 Tuebingen (DE)**
- **RIEWALD, Felix Florian**
  **72072 Tuebingen (DE)**

(74) Representative: **BASF IP Association**
**BASF SE**
**GBI - Z078**
**67056 Ludwigshafen (DE)**

(56) References cited:
**WO-A1-2020/175556**
**CN-A- 111 370 690**
**US-A1- 2008 044 736**
**US-A1- 2009 081 548**
**US-A1- 2016 028 077**

- **LI JILI ET AL: "The synergism of nanoplates with habit-tuned crystal and substitution of cobalt with titanium in Ni-rich LiNi0.80Co0.15Al0.05O2 cathode for lithium-ion batteries", JOURNAL OF ALLOYS AND COMPOUNDS, ELSEVIER SEQUOIA, LAUSANNE, CH, vol. 829, 29 February 2020 (2020-02-29), XP086120884, ISSN: 0925-8388, [retrieved on 20200229], DOI: 10.1016/J.JALLCOM.2020.154555**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 416 106 B1

## Description

The present invention is directed towards a process for making an electrode active material wherein said process comprises the following steps:

(a) Providing an (oxy)hydroxide of TM wherein TM is transition metal and includes nickel and, optionally, at least one of cobalt and manganese, wherein the nickel content is at least 80 mol-% referring to TM,
(b) mixing said (oxy)hydroxide of TM with 75 to 85 mol-% of a lithium source, referring to TM, and at least one compound of Mg or Al,
(c) treating the resultant mixture at a temperature at a temperature in the range of from 400 to 700°C, thereby obtaining a powder,
(d) mixing the powder from step (c) with a source of lithium and with at least one compound of $M^2$ wherein $M^2$ is selected from Nb, Ta, W, Ti or Zr,
(e) treating the mixture obtained from step (d) thermally at a temperature in the range of from 550 to 800°C.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.
Many electrode active materials discussed today are of the type of lithiated nickel-cobalt-manganese oxide ("NCM materials") or lithiated nickel-cobalt-aluminum oxide ("NCA materials").
In a typical process for making cathode materials for lithium-ion batteries, first a so-called precursor is being formed by co-precipitating the transition metals as carbonates, oxides or preferably as hydroxides that may or may not be basic. The precursor is then mixed with a lithium compound such as, but not limited to LiOH, $Li_2O$ or - especially - $Li_2CO_3$ - and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1000°C. During the thermal treatment a solid state reaction takes place, and the electrode active material is formed. In cases hydroxides or carbonates are used as precursors the solid state reaction follows a removal of water or carbon dioxide. The thermal treatment is performed in the heating zone of an oven or kiln. LI JILI et al (JOURNAL OF ALLOYS AND COMPOUNDS, vol. 829, 29 February 2020, pages 2-9), discloses nickel rich (above 80mol %) electrode materials doped with at least Al and Ti. The said materials are prepared by a process comprising two heat treatment steps, at the temperatures of 450°C and 750°C but differing by the introduction of the lithium and dopants.
In order to improve the capacity of cathode active materials, it has been suggested to select as high a nickel content as possible. However, in materials such as $LiNiO_2$, it has been observed that poor cycle life, pronounced gassing and a strong increase of the internal resistance during cycling provide high challenges for a commercial application.
It was therefore an objective of the present invention to provide a cathode active material that overcomes the above mentioned shortcomings, and it was an objective to provide a process to make such cathode active materials.
Accordingly, the process as defined at the outset has been found, hereinafter also referred to as inventive process or process according to the (present) invention. The inventive process comprises several steps, hereinafter also referred to as step (a), step (b) etc.
Steps (a) to (e) are described in more detail below.
In step (a), a particulate (oxy)hydroxide of TM is provided wherein TM is transition metal and includes nickel and, optionally, at least one of cobalt and manganese, wherein the nickel content is at least 80 mol-% referring to TM, preferably at least 90 mol-% and more preferably at least 98 mol-%.
In one embodiment of the present invention, said (oxy)hydroxide of TM is selected from nickel hydroxide, nickel (II) oxide and nickel oxyhydroxide, hereinafter altogether also referred to as nickel oxide/hydroxide. In the context of the present invention, the term nickel oxyhydroxide is not limited to stoichiometric NiOOH but to any compound of nickel that bears only oxide and hydroxide counterions and a maximum individual content of impurities of 2% by weight of metals such as Mn or Mg, referring to the total metal content of said nickel hydroxide, nickel (II) oxide or nickel oxyhydroxide. Preferably, nickel hydroxide, nickel (II) oxide or nickel oxyhydroxide has a maximum total impurity content of 2% by weight, referring to the total metal content of said nickel hydroxide, nickel (II) oxide or nickel oxyhydroxide.
The (oxy)hydroxide of TM provided in step (a) has an average particle diameter (D50) in the range of from 2 to 20 μm, preferably from 4 to 16 μm. The average particle diameter can be determined, e. g., by light scattering or LASER diffraction or electroacoustic spectroscopy. The particles may be composed of agglomerates from primary particles, and the above particle diameter refers to the secondary particle diameter.
A preferred nickel oxide/hydroxide is freshly precipitated nickel hydroxide.
In one embodiment of the present invention, TM corresponds to general formula (I)

$(Ni_aCo_bMn_c)$ (I)

with

a being in the range of from 0.85 to 0.99, preferably 0.90 to 0.98,
b being zero or in the range of from 0.01 to 0.14, preferably 0.01 to 0.05,
c being zero or in the range of from 0.01 to 0.15, preferably 0.01 to 0.09, and

$$a + b + c = 1.$$

In one embodiment of the present invention, the nickel oxide/hydroxide provided in step (a) has a residual moisture content in the range of from 50 to 1,000 ppm, preferably from 100 to 400 ppm. The residual moisture content may be determined by Karl-Fischer titration.

In step (b), said nickel oxide/hydroxide is mixed with 75 to 85 mol-% of a lithium source and with at least one compound of Al or Mg, in the absence of solvents such as water or organic solvents.

Suitable compounds of Mg are $Mg(OH)_2$, MgO, $Mg(NO_3)_2$, and oxalates such as $MgC_2O_4$.

Suitable compounds of Al are nitrates, oxides, hydroxides and oxyhydroxides, for example $Al_2O_3$, $Al(OH)_3$, AlOOH, $Al_2(SO_4)_3$, $KAl(SO_4)_2$, and $Al(NO_3)_3$, alkanolates of Al such as, but not limited to $Al(C_2H_5O)_3$, Al-tris-isopropoxide, and mixed salts of at least 2 cations such as aluminum magnesium isopropoxide.

In addition, a source of lithium is added.

Examples of sources of lithium are $Li_2O$, LiOH, and $Li_2CO_3$, each water-free or as hydrate, if applicable, for example $LiOH \cdot H_2O$. Preferred example is lithium hydroxide.

The amounts of source of lithium and of (oxy)hydroxide of TM is selected in a way that the molar ratio of Li and TM is in the range of from 3:4 to 85:100.

The amount of compound of Al or Mg preferably corresponds to 0.1 to 2.0 mol-%, preferably 1.0 to 1.5 mol-%, referring to TM. In embodiment where both Mg and Al are added the total sum of dopant corresponds to the sum of Mg and Al.

Said source of lithium is preferable in particulate form, for example with an average diameter (D50) in the range of from 3 to 10 μm, preferably from 5 to 9 μm.

In one embodiment of the present invention, step (b) is performed at a temperature in the range of from 5 to 85 °C, preferred are 10 to 60 °C.

In one embodiment of the present invention, step (b) is performed at normal pressure. It is preferred, though, to perform step (b) under elevated pressure, for example at 10 mbar to 10 bar above normal pressure, or with suction, for example 50 to 250 mbar below normal pressure, preferably 100 to 200 mbar below normal pressure.

Step (b) may be performed, for example, in a vessel that can be easily discharged, for example due to its location above a filter device. Such vessel may be charged with nickel oxide/hydroxide from step (a) followed by introduction of source of lithium and of compounds of Mg or Al. In another embodiment, such vessel is charged with source of lithium and with compounds of Mg or Al followed by introduction of nickel oxide/hydroxide from step (a). In another embodiment, nickel oxide/hydroxide from step (a) and compounds of Mg or Al and source of lithium are introduced simultaneously.

Mixing of the nickel oxide/hydroxide with the compounds of Mg or Al and the source of lithium may take place over a period of from 1 minute to 3 hours, preferably from 5 minutes to 1 hour, even more preferably from 5 to 30 minutes.

Step (b) may be supported by mixing operations, for example shaking or in particular by stirring or shearing, see below.

Examples of suitable apparatuses for performing step (b) are high-shear mixers, tumbler mixers, plough-share mixers and free fall mixers.

In one embodiment of the present invention, step (b) is performed at a temperature in the range of from ambient temperature to 200 °C, preferably 20 to 50 °C.

A powdery mixture is obtained from step (b).

Step (c) includes subjecting said mixture from step (b) to a thermal treatment. Examples of step (c) are heat treatments at a temperature in the range of from 400 to 700 °C, preferably 500 to 600 °C. The terms "treating thermally" and "heat treatment" are used interchangeably in the context of the present invention.

In one embodiment of the present invention, the mixture obtained from step (b) is heated to 400 to 700 °C with a heating rate of 0.1 to 10 °C/min.

In one embodiment of the present invention, the temperature is ramped up before reaching the desired temperature of from 400 to 700 °C, preferably 500 to 600°C. For example, first the mixture obtained from step (c) is heated to a temperature to 350 to 400 °C and then held constant for a time of 10 min to 2 hours, and then it is raised to 500 °C

up to 700 °C and then held at 500 to 700°C for 10 minutes to 4 hours.

In one embodiment of the present invention, step (c) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (c) is performed in an oxygen-containing atmosphere, for example in a nitrogen-air mixture, in a rare gas-oxygen mixture, in air, in oxygen or in oxygen-enriched air. In a preferred embodiment, the atmosphere in step (c) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen.

In one embodiment of the present invention, step (c) is performed under a stream of gas, for example air, oxygen and oxygen-enriched air. Such stream of gas may be termed a forced gas flow. Such stream of gas may have a specific flow rate in the range of from 0.5 to 15 $m^3/h \cdot kg$ mixture from step (b). The volume is determined under normal conditions: 298 Kelvin and 1 atmosphere. Said stream of gas is useful for removal of gaseous cleavage products such as water and carbon dioxide.

In one embodiment of the present invention, step (c) has a duration in the range of from thirty minutes to 24 hours. Preferred are 1 to 10 hours. The time at a temperature of 400 °C or above is counted as well as heating and holding but the cooling time is neglected in this context.

A powder is obtained from step (c). Said powder may be deagglomerated before step (d) if desired.

In step (d), the powder obtained from step (c) is mixed with a source of lithium and with at least one compound of and with at least one compound of $M^2$ wherein $M^2$ is selected from Nb, Ta, W, Ti or Zr.

Suitable examples of sources of lithium as well as of compounds of Al and Mg are disclosed above.

Suitable compounds of $M^2$ are oxides, (oxy)hydroxides and nitrates of Ti, of Zr, of W, of Mo, and of Nb, such as $TiO_2$, $Ti_2O_3$, $TiO(OH)_2$, $ZrO_2$, $Zr(OH)_4$, $TiO(NO_3)_2$, $Ti(NO_3)_4$, niobic acid, $Nb_2O_5$, $Ta_2O_5$, $WO_3$, $Li_2WO_4$, $Li_2MoO_4$, and $MoO_3$. Further examples of compounds of $M^1$ are for instance but not limited to ammonium metatungstate (hydrate), ammonium orthomolyb-date, ammonium heptamolybdate, ammonium dimolybdate, ammonium niobate oxalate, ammonium zirconium (IV) carbonate, either as such or as hydrates.

In one embodiment of the present invention, the total molar amount of compound(s) of Al or Mg to TM is in the range of from 0.1 to 2 mol-%, preferably 1 to 1.5 mol-%.

In one embodiment of the present invention, the total molar amount of compound(s) of $M^2$ to TM is in the range of from 0.2 to 1 mol-%, preferably 0.25 to 0.5 mol-%.

In one embodiment of the present invention, the amount of source of lithium used in steps (b) and (d) is selected in a way that molar ratio of (Li + Mg) divided by (TM + Al + $M^2$) is in the range of from 0.99 to 1.05, preferably 1.0 to 1.03. The amount of Li refers to the amount from step (b) and step (d). The amount of either Al or Mg may be zero.

The amount of source of lithium in step (d) may thus be in the range of from about 15 to 30 mol-%, referring to TM.

With respect to equipment and mixing parameters other than the above, the same equipment and mixing parameters may be applied as in step (b).

A mixture is obtained from step (d). In step (e), the mixture obtained from step (d) is treated thermally at a temperature in the range of from 550 to 800, preferably 700 to 750°C. Preferably, the temperature in step (e) is higher than in step (c), for example by at least 50°C or at least 100°C.

In one embodiment of the present invention, the duration of step (e) is in the range of from 1 hour to 24 hours. Preferred are 2 hours to 12 hours.

With respect to equipment and process parameters other than the above, the same equipment and process parameters may be applied as in step (c).

A material is obtained that is excellently suitable as cathode active material for lithium ion batteries.

In one embodiment of the present invention, it is possible to treat inventive material with water and subsequently drying it. In another embodiment, it is possible to at least partially coat particles of inventive material, for example by mixing it with an oxide or hydroxide, for example with a compound of cobalt or alumina or with boric acid, followed by thermal treatment at 150 to 400°C. In another embodiment of the present invention, it is possible to at least partially coat particles of inventive material by way of atomic layer deposition methods, for example by alternating treatment(s) with trimethylaluminum and moisture.

In one embodiment of the present invention, the inventive process comprises a step (f) of adding a compound of boron or cobalt to the material obtained from step (e) and a subsequent thermal treatment, for example at 150 to 400°C for a boron compound-post-treatment or 500 to 700°C for a cobalt compound-post-treatment, for example for 1 to 5 hours. Suitable compounds of boron are $LiBO_2$, $B_2O_3$ and $B(OH)_3$. Suitable compounds of cobalt are CoO, $Co_2O_3$, $Co_3O_4$, $Co(NO_3)_2$, CoOOH, and $Co(OH)_2$.

A further aspect of the present invention is related to cathode active materials, hereinafter also referred to as

inventive cathode active materials or inventive electrode active materials. Inventive cathode active materials are particulate materials according to the general formula $Li_{1+x}M^1_1(M^2_{y2}TM)_{1-x-y1}O_2$ wherein TM is transition metal and includes nickel and, optionally, at least one of cobalt and manganese and wherein the nickel content is at least 80 mol-% referring to TM, x is in the range of from zero to 0.05, $M^1$ is selected from Mg and Al and combinations thereof, $M^2$ is selected from Nb, Ta, W, Ti or Zr and combinations of at least two thereof, y1 is in the range of from 0.005 to 0.05, y2 is in the range of from 0.0025 to 0.02, and wherein said material has an average primary particle diameter in the range of from 50 to 350 nm and a span in the range of from 0.5 to 1.1. The span is determined by evaluation of SEM pictures and refers to the primary particles. Inventive cathode active materials are advantageously made according to the inventive process.

In embodiments wherein a coating with boric acid or a cobalt compound has been made the above formula refers to the core of inventive cathode active material.

In one embodiment of the present invention, inventive cathode active material has an average particle diameter (D50) in the range of from 2 to 20 μm, preferably from 4 to 16 μm. The average particle diameter can be determined, e. g., by light scattering or LASER diffraction or electroacoustic spectroscopy. The particles may be composed of agglomerates from primary particles, and the above particle diameter refers to the secondary particle diameter.

A further aspect of the present invention are electrodes comprising at least one inventive material. They are particularly useful for lithium ion batteries. Lithium ion batteries comprising at least one electrode according to the present invention exhibit a very good discharge and cycling behavior, and they show good safety behavior.

In one embodiment of the present invention, inventive cathodes contain

(A) at least one inventive material, as described above,
(B) carbon in an electrically conductive state, and
(C) a binder,
(D) a current collector.

In a preferred embodiment of the present invention, inventive cathodes contain

(A) 80 to 98 % by weight inventive material,
(B) 1 to 17 % by weight of carbon,
(C) 1 to 10 % by weight of binder,

percentages referring to the sum of (A), (B) and (C).

Cathodes according to the present invention contain carbon in electrically conductive modification, in brief also referred to as carbon (B). Carbon (B) can be selected from soot, active carbon, carbon nanotubes, graphene, and graphite. Carbon (B) can be added as such during preparation of electrode materials according to the invention.

Electrodes according to the present invention can comprise further components. They can comprise a current collector (D), such as, but not limited to, an aluminum foil. They further comprise a binder material (C), hereinafter also referred to as binder (C). Current collector (D) is not further described here.

Suitable binders (C) are preferably selected from organic (co)polymers. Suitable (co)polymers, i.e. homopolymers or copolymers, can be selected, for example, from (co)polymers obtainable by anionic, catalytic or free-radical (co) polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homo-polyethylene, but also copolymers of ethylene which comprise at least 50 mol% of copolymerized ethylene and up to 50 mol% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and α-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight $M_w$ in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co) polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene. Inventive electrodes may comprise 3 to 10% by weight of binder(s) (d), referring to the sum of component (a), component (b) and carbon (c).

A further aspect of the present invention is a battery, containing

(1) at least one cathode comprising inventive cathode active material (A), carbon (B), and binder (C),
(2) at least one anode, and
(3) at least one electrolyte.

Embodiments of cathode (1) have been described above in detail.

Anode (2) may contain at least one anode active material, such as carbon (graphite), $TiO_2$, lithium titanium oxide, silicon or tin. Anode (2) may additionally contain a current collector, for example a metal foil such as a copper foil.

Electrolyte (3) may comprise at least one non-aqueous solvent, at least one electrolyte salt and, optionally, additives.

Nonaqueous solvents for electrolyte (3) can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (II) and (III)

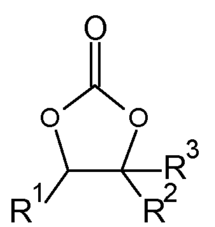

(II)

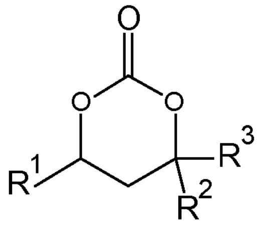

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (IV).

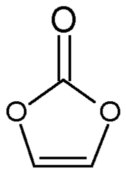

(IV)

The solvent or solvents is/are preferably used in the water-free state, i.e. with a water content in the range from 1 ppm to 0.1% by weight, which can be determined, for example, by Karl-Fischer titration.

Electrolyte (3) further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)$,YLi, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In a preferred embodiment of the present invention, electrolyte (3) contains at least one flame retardant. Useful flame retardants may be selected from trialkyl phosphates, said alkyl being different or identical, triaryl phosphates, alkyl dialkyl phosphonates, and halogenated trialkyl phosphates. Preferred are tri-$C_1$-$C_4$-alkyl phosphates, said $C_1$-$C_4$-alkyls being different or identical, tribenzyl phosphate, triphenyl phosphate, $C_1$-$C_4$-alkyl di- $C_1$-$C_4$-alkyl phosphonates, and fluorinated tri-$C_1$-$C_4$-alkyl phosphates,

In a preferred embodiment, electrolyte (3) comprises at least one flame retardant selected from trimethyl phosphate, $CH_3$-P(O)$(OCH_3)_2$, triphenylphosphate, and tris-(2,2,2-trifluoroethyl)phosphate.

Electrolyte (3) may contain 1 to 10% by weight of flame retardant, based on the total amount of electrolyte.

In an embodiment of the present invention, batteries according to the invention comprise one or more separators (4) by means of which the electrodes are mechanically separated. Suitable separators (4) are polymer films, in particular porous polymer films, which are unreactive toward metallic lithium. Particularly suitable materials for separators (4) are polyolefins, in particular film-forming porous polyethylene and film-forming porous polypropylene.

Separators (4) composed of polyolefin, in particular polyethylene or polypropylene, can have a porosity in the range from 35 to 45%. Suitable pore diameters are, for example, in the range from 30 to 500 nm.

In another embodiment of the present invention, separators (4) can be selected from among PET nonwovens filled with inorganic particles. Such separators can have a porosity in the range from 40 to 55%. Suitable pore diameters are, for example, in the range from 80 to 750 nm.

Batteries according to the invention can further comprise a housing which can have any shape, for example cuboidal or the shape of a cylindrical disk. In one variant, a metal foil configured as a pouch is used as housing.

Batteries according to the invention provide a very good discharge and cycling behavior, in particular at high temperatures (45 °C or higher, for example up to 60 °C) in particular with respect to the capacity loss.

Batteries according to the invention can comprise two or more electrochemical cells that combined with one another, for example can be connected in series or connected in parallel. Connection in series is preferred. In batteries

according to the present invention, at least one of the electrochemical cells contains at least one electrode according to the invention. Preferably, in electrochemical cells according to the present invention, the majority of the electrochemical cells contain an electrode according to the present invention. Even more preferably, in batteries according to the present invention all the electrochemical cells contain electrodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by the following working examples.

Average particle diameters (D50) were determined by dynamic light scattering ("DLS"). Percentages are % by weight unless specifically noted otherwise. "rpm": revolutions per minute.

$LiOH \cdot H_2O$ was purchased from Rockwood Lithium. $Mg(OH)_2$ was purchased from Sigma Aldrich, $Al_2O_3$ was purchased from Sasol, $Zr(OH)_4$ from Luxfer Mel Technologies, $WO_3$ from Avantama and $TiO_2$ from Hombikat.

As a mixer, a blender (Kinematica) was used.

!. Manufacture of a base cathode active material, $LiNiO_2$

I.1 Manufacture of a precursor

Step (a.1): A spherical $Ni(OH)_2$ precursor was obtained by combining aqueous nickel sulfate solution (1.65 mol/kg solution) with an aqueous 25 wt.% NaOH solution and using ammonia as complexation agent. The pH value was set at 12.6. The freshly precipitated $Ni(OH)_2$ was washed with water, sieved and dried at 120 °C for 12 hours. The resultant $Ni(OH)_2$ ("P-CAM.1") had an average particle diameter D50 of 10 μm.

II. Manufacture of inventive cathode active materials, and of comparative cathode active materials

II.1 Manufacture of C-CAM.1

Step (b.1): An amount of 50 g of P-CAM.1 was mixed with 22.80 g $LiOH \cdot H_2O$, 0.32 g $Mg(OH)_2$, 0.15 g $Al_2O_3$ and 0.25 g $Zr(OH)_4$.

Step (c.1): The resultant mixture was poured into an alumina crucible and heated to 600 °C for one hour and then to 700 °C for 6 hours under oxygen atmosphere (10 exchanges / hour) with a heating rate of 10 °C min-1 for the first temperature ramp and 3 °C min-1 for the second ramp. Said heat treatment was performed in laboratory furnace (Linn High Therm). C-CAM.1 was obtained. C-CAM.1 was cooled to 120 °C at a cooling rate of 10 °C $min^{-1}$ and transferred into a dry room for further processing.

Neither a step (d) nor (e) was performed.

Subsequently, the resultant C-CAM.1 was sieved using a mesh size of 32 μm to C-CAM.1 with 1.0 mol% Mg, 0.55 mol% Al, 0.24 mol% Zr and molar ratio (Li + Mg)/(Ni + Al + Zr) = 1.01.

II.2 Manufacture of CAM.2

Step (b.2): An amount of 50 g of P-CAM.1 was mixed with 17.67 g $LiOH \cdot H_2O$, 0.25 g $Mg(OH)_2$, and 0.15 g $Al_2O_3$.

Step (c.2): The resultant mixture was poured into a metal bulb that was part of a rotary kiln and heated to 600 °C for one hour under oxygen atmosphere (100 exchanges / hour) with a heating rate of 10 °C $min_{-1}$. The rotational speed was 20 rpm. An intermediate was obtained. The resultant intermediate was cooled to ambient temperature at a cooling rate of 10 °C/min and transferred into a dry room for further processing. The composition was 63 wt% Ni, 0.13 wt% Al, 0.19 wt% Mg and 5.8 wt% Li.

Step (d.2): An amount of 15 g of the intermediate from step (c.2) was mixed with 1.70 g $LiOH \cdot H_2O$ and 0.07 g $Zr(OH)_4$ using a blender. A mixture was obtained.

Step (e.2): The mixture from step (d.2) was poured into an alumina crucible and heated to 700 °C for 6 hours under oxygen atmosphere (10 exchanges / hour) with a heating rate of 3 °C $min^{-1}$ in a laboratory furnace. The resultant CAM.2 was cooled to 120 °C at a cooling rate of 10 °C $min^{-1}$ and transferred to a dry room for further processing.

Subsequently, CAM.2 was sieved using a mesh size of 32 μm with 0.74 mol% Mg, 0.49 mol% Al, 0.25 mol% Zr and molar ratio (Li + Mg)/(Ni + Al + Zr) = 1.01 (measured by ICP-OES). The span of the primary particles was in the range of from 0.5 to 1.1, determined by evaluation of SEM pictures.

II.3 Manufacture of CAM.3

Step (b.3): An amount of 50 g of P-CAM.1 was mixed with 17.67 g $LiOH \cdot H_2O$, 0.25 g $Mg(OH)_2$, and 0.15 g $Al_2O_3$.

Step (c.3): The resultant mixture was poured into a metal bulb that was part of a rotary kiln and heated to 600 °C for one hour under oxygen atmosphere (100 exchanges / hour) with a heating rate of 10 °C/min. The rotational speed was 20 rpm. An intermediate was obtained.

The resultant intermediate was cooled to ambient temperature at a cooling rate of 10 °C/min and transferred into a dry room for further processing. The composition was 63 wt% Ni, 0.13 wt% Al, 0.19 wt% Mg and 5.8 wt% Li.

Step (d.3): An amount of 15 g of the intermediate from step (c.2) was mixed with 1.70 g $LiOH \cdot H_2O$ and 0.03 g $TiO_2$ using a blender. A mixture was obtained.

Step (e.3): The mixture from step (d.3) was poured into an alumina crucible and heated to 700 °C for 6 hours under oxygen atmosphere (10 exchanges / hour) with a heating rate of 3 °C/min in a laboratory furnace. The resultant CAM.3 was cooled to 120 °C at a cooling rate of 10 °C/min and transferred to a dry room for further processing.

Subsequently, CAM.3 was sieved using a mesh size of 32 $\mu$m with 0.74 mol% Mg, 0.49 mol% Al, 0.24 mol% Ti and molar ratio (Li + Mg)/(Ni + Al + Ti) = 1.03 (measured by ICP-OES). The span of the primary particles was in the range of from 0.5 to 1.1, determined by evaluation of SEM pictures.

II.4 Manufacture of CAM.4

Step (b.4): An amount of 50 g of P-CAM.1 was mixed with 17.67 g $LiOH \cdot H_2O$, 0.25 g $Mg(OH)_2$, and 0.15 g $Al_2O_3$.

Step (c.4): The resultant mixture was poured into a metal bulb that was part of a rotary kiln and heated to 600 °C for one hour under oxygen atmosphere (100 exchanges/h) with a heating rate of 10 °C/min. The rotational speed was 20 rpm. An intermediate was obtained. The resultant intermediate was cooled to ambient temperature at a cooling rate of 10°C/min and transferred into a dry room for further processing. The composition was 63 wt% Ni, 0.13 wt% Al, 0.19 wt% Mg and 5.8 wt% Li.

Step (d.4): An amount of 15 g of the intermediate from step (c.4) was mixed with 1.70 g $LiOH \cdot H_2O$ and 0.09 g $WO_3$ using a blender. A mixture was obtained.

Step (e.4): The mixture from step (d.4) was poured into an alumina crucible and heated to 700 °C for 6 hours under oxygen atmosphere (10 exchanges / hour) with a heating rate of 3 °C $min^{-1}$ in a laboratory furnace. The resultant CAM.4 was cooled to 120 °C at a cooling rate of 10 °C $min^{-1}$ and transferred to a dry room for further processing.

Subsequently, CAM.4 was sieved using a mesh size of 32 $\mu$m with 0.74 mol% Mg, 0.47 mol% Al, 0.22 mol% W and molar ratio (Li + Mg)/(Ni + Al + W) = 1.03 (measured by ICP-OES). The span of the primary particles was in the range of from 0.5 to 1.1, determined by evaluation of SEM pictures.

III. Electrochemical Testing

III.1 Cathode manufacture, general protocol:

Electrode manufacture: Electrodes contained 94% of the respective CAM or C-CAM.1, 3% carbon black (Super C65) and 3% binder (polyvinylidene fluoride, Solef 5130). Slurries with a total solids content of 61% were mixed in N-methyl-2-pyrrolidone (planetary mixer, 24 minutes, 2,000 rpm) and cast onto aluminum foil tape by a box-type coater. After drying of the electrode tapes for 16 h at 120 °C in vacuo and calendaring, circular electrodes with a diameter of 14 mm were punched, weighed and dried at 120 °C under vacuum for 12 hours before entering in an Ar filled glove box. Average loading: 8 $mg/cm^2$, electrode density: 3 $g/cm^3$.

III.2 Coin cell manufacture

Coin-type electrochemical cells were assembled in an argon-filled glovebox. Anode: 0.58 mm thick Li foil, separated from the cathode by a glass fiber separator (Whatman GF/D). An amount of 95 $\mu$l of 1 M $LiPF_6$ in ethylene carbonate (EC): ethylmethyl carbonate (EMC), 3:7 by weight, was used as the electrolyte. After assembly, the cells were crimped closed in an automated crimper. The cells were then transferred to a climate chamber and connected to a battery cycler (Series4000, MACCOR).

III.3 Coin cell testing.

All tests were performed at 25 °C. Cells were galvanostatically cycled at a Maccor 4000 battery cycler between 3.0 and 4.3 V at room temperature by applying the following C-rates until 70 % of the initial discharge capacity is reached at a certain discharge step:

The test protocol consisted of an initial formation & rate test part, starting with two cycles at C/10. For all cycles, the voltage window was set to 3.0 - 4.3 V. As an initial 1C rate, 200 mA g-1 were assumed. For all subsequent cycles, the charge was set to CCCV at C/2 and 4.3 V for 30 min or until the current drops below C/100. The cells were discharged at C/5 for five cycles before stepwise increasing the discharge rate (C/10, C/5, C/2, 1C, 2C, 3C). The 1C rate was then adapted to the capacity of the 1C discharge. After the rate test and a C/5 discharge cycle, two additional C/10 discharge cycles and 50 1C discharge cycles were performed. Afterwards, a C/10 discharge cycle was measured.

Table 1: Capacities from Coin Half Cell testing

| sample | 1st cycle charge / m·Ah $g^{-1}$ | 1st cycle discharge/ mA·h $g^{-1}$ | 2nd cycle discharge/ mA·h $g^{-1}$ | 11th cycle discharge/ mA·h $g^{-1}$ | 67th cycle discharge/ mA·h $g^{-1}$ |
|---|---|---|---|---|---|
| | 0.1 C | 0.1 C | 0.1 C | 1 C | 0.1 C retention |
| C-CAM.1 | 245.2 | 200.9 | 205.5 | 190.5 | 169.4 |
| CAM.2 | 249.0 | 204.1 | 212.1 | 190.9 | 181.9 |
| CAM.3 | 246.9 | 201.4 | 216.4 | 194.7 | 178.4 |

**Claims**

**1.** Process for making an electrode active material wherein said process comprises the following steps:

(a) Providing an (oxy)hydroxide of TM wherein TM is transition metal and includes nickel and, optionally, at least one of cobalt and manganese, wherein the nickel content is at least 80 mol-% referring to TM,
(b) mixing said (oxy)hydroxide of TM with 75 to 85 mol-% of a lithium source, referring to TM, and with at least one compound of Mg or Al,
(c) treating the resultant mixture at a temperature at a temperature in the range of from 400 to 700°C, thereby obtaining a powder,
(d) mixing the powder from step (c) with a source of lithium and with at least one compound of $M^2$ wherein $M^2$ is selected from Nb, Ta, W, Ti or Zr,
(e) treating the mixture obtained from step (d) thermally at a temperature in the range of from 550 to 800°C.

**2.** Process according to claim 1 additionally comprising a step (f) of adding a compound of boron or cobalt to the material obtained from step (e) and a subsequent thermal treatment.

**3.** Process according to claim 1 or 2 wherein in step (a), the (oxy)hydroxide contains both Co and Mn.

**4.** Process according to any of the preceding claims wherein TM corresponds to general formula (I)

$$(Ni_aCo_bMn_c) \qquad (I)$$

with

a being in the range of from 0.85 to 0.99,
b being zero or in the range of from 0.01 to 0.14,
c being zero or in the range of from 0.01 to 0.15, and

$$a + b + c = 1.$$

**5.** Process according to any of the preceding claims wherein the thermal treatment in step (e) is at a lower temperature than in step (c).

**6.** Process according to any of the preceding claims wherein step (e) is performed in an atmosphere of at least 80 vol-% oxygen.

7. Process according to any of the preceding claims wherein the temperature in step (c) is higher than in step (e).

8. Particulate electrode active material according to the general formula $Li_{1+x}M^1_{y1}(M^2_{y2}TM)_{1-x-y1}O_2$ wherein TM is transition metal and includes nickel and, optionally, at least one of cobalt and manganese and wherein the nickel content is at least 80 mol-% referring to TM, x is in the range of from zero to 0.05, $M^1$ is selected from Mg and Al and combinations thereof, $M^2$ is selected from Nb, Ta, W, Ti or Zr and combinations of at least two thereof, y1 is in the range of from 0.005 to 0.05, y2 is in the range of from 0.0025 to 0.02, and wherein said material has an average primary particle diameter in the range of from 50 to 350 nm and a span in the range of from 0.5 to 1.1, and an average particle diameter (D50) of the secondary particles in the range of from 2 to 20 μm.

9. Electrode active material obtained by a process according to any of the claims 1 to 7.

10. Cathode comprising

(A) at least one particulate electrode active material according to any of the claims 8 or 9,
(B) carbon in electrically conductive form, and
(C) a binder.

11. Cathode according to claim 10 comprising

(A) 80 to 98 % by weight particulate electrode active material,
(B) 1 to 17 % by weight of carbon, and
(C) 1 to 10 % by weight of binder.

12. Electrochemical cell comprising at least one cathode according to claim 10 or 11.

**Patentansprüche**

1. Verfahren zur Herstellung eines aktiven Elektrodenmaterials, wobei das Verfahren die folgenden Schritte umfasst:

(a) Bereitstellen eines (Oxy-)hydroxids von TM, wobei TM Übergangsmetall ist und Nickel und gegebenenfalls mindestens eines von Kobalt und Mangan umfasst, wobei der Nickelgehalt mindestens 80 mol-% bezogen auf TM beträgt,
(b) Mischen des (Oxy)hydroxids von TM mit 75 bis 85 mol-% einer Lithiumquelle, bezogen auf TM, und mit mindestens einer Verbindung von Mg oder Al,
(c) Behandlung des resultierenden Gemisches bei einer Temperatur im Bereich von 400 bis 700 °C, wodurch ein Pulver erhalten wird,
(d) Mischen des Pulvers aus Schritt (c) mit einer Lithiumquelle und mit mindestens einer Verbindung von M2, wobei M2 aus Nb, Ta, W, Ti oder Zr ausgewählt ist,
(e) Behandlung des aus Schritt d) erhaltenen Gemisches thermisch bei einer Temperatur im Bereich von 550 bis 800 °C.

2. Verfahren nach Anspruch 1, das zusätzlich einen Schritt (f) der Zugabe einer Verbindung aus Bor oder Kobalt zu dem aus Schritt (e) erhaltenen Material und eine anschließende thermische Behandlung umfasst.

3. Verfahren nach Anspruch 1 oder 2, wobei in Schritt (a) das (Oxy)hydroxid sowohl Co als auch Mn enthält.

4. Verfahren nach einem der vorhergehenden Ansprüche, wobei TM der allgemeinen Formel (I) entspricht

$$(Ni_aCo_bMn_c) \qquad (I)$$

wobei

a im Bereich von 0,85 bis 0,99 liegt,
b Null ist oder im Bereich von 0,01 bis 0,14 liegt,
c null ist oder im Bereich von 0,01 bis 0,15 liegt, und

$$a + b + c = 1.$$

5. Verfahren nach einem der vorhergehenden Ansprüche, wobei die thermische Behandlung in Schritt (e) eine niedrigere Temperatur als die in Schritt (c) hat.

6. Verfahren nach einem der vorhergehenden Ansprüche, wobei der Schritt (e) in einer Atmosphäre von mindestens 80 Vol.-% Sauerstoff durchgeführt wird.

7. Verfahren nach einem der vorhergehenden Ansprüche, wobei die Temperatur in Schritt (c) höher ist als in Schritt (e).

8. Partikuläres Elektrodenaktivmaterial nach der allgemeinen Formel $Li_{1+x}M^1_{y1}(M^2_{y2}TM)_{1-x-y1}O_2$, wobei TM Übergangsmetall ist und Nickel und gegebenenfalls mindestens eines aus Kobalt und Mangan umfasst, und wobei der Nickelgehalt mindestens 80 mol-% bezogen auf TM beträgt, x im Bereich von Null bis 0,05 liegt, $M^1$ aus Mg und Al und Kombinationen davon ausgewählt ist, $M^2$ ist ausgewählt aus Nb, Ta, W, Ti oder Zr und Kombinationen von mindestens zwei davon, y1 liegt im Bereich von 0,005 bis 0,05, y2 liegt im Bereich von 0,0025 bis 0,02, und wobei das Material einen durchschnittlichen Primärpartikeldurchmesser im Bereich von 50 bis 350 nm und eine Spanne im Bereich von 0,5 bis 1,1 aufweist, und einem durchschnittlichen Partikeldurchmesser (D50) der Sekundärpartikel im Bereich von 2 bis 20 $\mu$m.

9. Elektrodenaktives Material, das durch ein Verfahren nach einem der Ansprüche 1 bis 7 hergestellt wird.

10. Kathode enthaltend

    (A) mindestens ein partikuläres Elektrodenaktivmaterial nach einem der Ansprüche 8 oder 9,
    (B) Kohlenstoff in elektrisch leitfähiger Form und
    (C) ein Bindemittel.

11. Kathode nach Anspruch 10 mit

    (A) 80 bis 98 Gew.-% partikuläres Elektrodenaktivmaterial,
    (B) 1 bis 17 Gew.-% Kohlenstoff und
    (C) 1 bis 10 % des Gewichts des Bindemittels.

12. Elektrochemische Zelle mit mindestens einer Kathode nach Anspruch 10 oder 11.

## Revendications

1. Procédé de fabrication d'un matériau actif d'électrode, dans lequel ledit procédé comprend les étapes suivantes :

    (a) Fournir un (oxy)hydroxyde de TM dans lequel TM est un métal de transition et comprend du nickel et, éventuellement, au moins un de cobalt et de manganèse, dans lequel la teneur en nickel est d'au moins 80 % molaire se rapportant à TM,
    (b) mélanger ledit hydroxyde (oxy)de TM avec 75 à 85 % molaire d'une source de lithium, faisant référence à TM, et avec au moins un composé de Mg ou d'Al,
    (c) traitement du mélange résultant à une température comprise entre 400 et 700°C, obtenant ainsi une poudre,
    (d) mélanger la poudre de l'étape (c) avec une source de lithium et avec au moins un composé de M2 dans lequel M2 est choisi parmi Nb, Ta, W, Ti ou Zr,
    (e) traitement thermique du mélange obtenu à partir de l'étape (d) à une température comprise entre 550 et 800 °C.

2. Procédé selon la revendication 1, comprenant en outre une étape (f) d'ajout d'un composé de bore ou de cobalt au matériau obtenu à partir de l'étape (e) et un traitement thermique ultérieur.

3. Procédé selon la revendication 1 ou 2, dans lequel, à l'étape (a), l'hydroxyde d'(oxy)hydroxyde contient à la fois du Co et du Mn.

**4.** Procédé selon l'une quelconque des revendications précédentes, dans lequel TM correspond à la formule générale (I)

$$(Ni_aCo_bMn_c) \qquad (I)$$

avec

a étant compris entre 0,85 et 0,99,
b étant égal à zéro ou compris entre 0,01 et 0,14,
c étant égal à zéro ou compris entre 0,01 et 0,15, et

$$a + b + c = 1.$$

**5.** Procédé selon l'une quelconque des revendications précédentes, dans lequel le traitement thermique de l'étape (e) est à une température inférieure à celle de l'étape (c).

**6.** Procédé selon l'une quelconque des revendications précédentes, dans lequel l'étape (e) est réalisée dans une atmosphère d'au moins 80 % en volume d'oxygène.

**7.** Procédé selon l'une quelconque des revendications précédentes, dans lequel la température à l'étape (c) est supérieure à celle de l'étape (e).

**8.** Matériau actif d'électrode particulaire selon la formule générale $Li_{1+x}M^1_{y1}(M^2_{y2}TM)_{1-x-y1}O_2$, dans lequel TM est métal de transition et comprend du nickel et, éventuellement, au moins un de cobalt et de manganèse et dans lequel la teneur en nickel est d'au moins 80 % molaire se rapportant à TM, x est compris entre zéro et 0,05, $M^1$ est choisi parmi Mg et Al et leurs combinaisons, $M^2$ est choisi parmi Nb, Ta, W, Ti ou Zr et des combinaisons d'au moins deux de ceux-ci, y1 est dans la plage de 0,005 à 0,05, y2 est dans la plage de 0,0025 à 0,02, et ledit matériau a un diamètre moyen de particule primaire compris entre 50 et 350 nm et une portée comprise entre 0,5 et 1,1, et un diamètre moyen des particules (D50) des particules secondaires compris entre 2 et 20 μm.

**9.** Matériau actif d'électrode obtenu par un procédé selon l'une quelconque des revendications 1 à 7.

**10.** Cathode comprenant

(A) au moins un matériau actif d'électrode particulaire selon l'une quelconque des revendications 8 ou 9,
(B) carbone sous forme conductrice d'électricité, et
(C) un classeur.

**11.** Cathode selon la revendication 10, comprenant

(A) 80 à 98 % en poids de matériau actif d'électrode particulaire,
(B) 1 à 17 % en poids de carbone, et
(C) 1 à 10 % en poids de liant.

**12.** Pile électrochimique comportant au moins une cathode selon la revendication 10 ou 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **LI JILI et al.** *JOURNAL OF ALLOYS AND COMPOUNDS*, 29 February 2020, vol. 829, 2-9